# EUROPEAN PATENT APPLICATION

(11) **EP 1 887 794 A2**
(43) Date of publication of application: **13.02.2008**
(21) Application number: 07251666.9
(22) Date of filing: 20.04.2007
(51) Int. Cl.: H04N 5/44

(54) **Portable device integrated with external video signal display function**

(30) Priority: 21.07.2006 CN 200610099224
(71) Applicant: ASUSTeK Computer Inc., Peitou, Taipei (TW)
(72) Inventor: Lin, Wei-Po, Taipei (TW)
(74) Representative: Chamberlain, Alan James

(57) **Abstract**

A portable device integrated with external video signal display function is provided. The device includes a video input interface, a display panel, a display chip, and a panel controller. The video input interface receives an external video. The display chip outputs an internal video. The panel controller includes a first input interface, a second input interface, and an output interface. The first input interface is coupled to the video input interface to receive the external video. The second input interface is coupled to the display chip to receive the internal video. The output interface is coupled to the display panel. Whether the display panel displays the external video or the internal video is determined according to an internal instruction.

## Description

### BACKGROUND OF THE INVENTION

### Field of the Invention

The present invention relates to a portable device. More particularly, the present invention relates to a portable device integrated with external video signal display function.

### Description of Related Art

Nowadays, electronic devices are always used for processing various events, such as communication, schedule management, or word processing. Along with the development of technology, the design of electronic device is going towards miniaturization and high portability. Portable devices are electronic devices which can be carried around, such as a notebook computer.

Recently, notebook computer has the tendency to replace desktop computer for the cost of notebook computer is progressively reduced and the performance thereof is catching up with the performance of desktop computer. In some developing countries, the market of notebook computers even grows faster than that of desktop computers. Notebook computer is going to replace desktop computer in the situation that the prices of the two are leveled and the specifications thereof are similar.

Along with the rise of digital home entertainment technology, notebook computer starts to support external video input. However, existing notebook computers can only support standard definition (SD), which is 480p or 480i. Usually the foregoing notebook computers receive external SD video through AV terminal or S terminal and then decode the SD video with video decoder.

Besides, on today's market, many video/audio players (for example, high definition DVD player), electronic game consoles (for example, XBOX 360 or PS3), or digital cameras (for example, SONY HDR-HC3) have started to have high definition video output interfaces such as high definition multimedia interface (HDMI) and digital visual interface (DVI). However, there is still no notebook computer which can support the foregoing interfaces until today.

### SUMMARY OF THE INVENTION

Accordingly, the present invention is directed to a portable device integrated with external video signal display function to resolve the problems in conventional technology.

The present invention provides a portable device integrated with external video signal display function. The portable device includes a display panel, a display chip, a panel controller, and a video switching device. The display chip provides a first internal video. The panel controller receives an external video and converts the format thereof into a second internal video. The video switching device is respectively coupled to the display panel, the display chip, and the panel controller to receive the first internal video and the second internal video. The video switching device further receives an internal instruction and outputs the first internal video or the second internal video to the display panel according to the internal instruction. Thus, the display panel of the portable device can display high definition display signal input from external; accordingly, the portable device can be used as a monitor.

According to an exemplary embodiment of the present invention, the portable device further includes an audio output device, an audio input interface, and an audio switching device. The audio input interface receives an external audio. The audio switching device is respectively coupled to the audio input interface and the audio output device to receive an internal audio provided by a sound encoder/decoder and the external audio, and the audio switching device determines whether to output the internal audio or the external audio to the audio output device according to the internal instruction.

According to the portable device in an exemplary embodiment of the present invention, the internal instruction is provided by an embedded controller or a south bridge chip. In an exemplary embodiment, the external audio interface may be a stereo input interface. The external video may be a HDMI signal, a DVI signal, a RGB signal, or an YPbPr signal, and the formats of the first internal video and the second internal video is a low voltage differential signal (LVDS) format. The sound encoder/decoder may be an AC97 encoder/decoder or a HD audio encoder/decoder.

According to an exemplary embodiment of the present invention, the portable device further includes a video I/O device and an I/O switching device. The I/O switching device is respectively coupled to the display chip and the video I/O device and receives an output video signal provided by the display chip and the internal instruction, so that the I/O switching device can output the output video signal to the video I/O device according to the internal instruction.

The present invention provides a portable device including a video input interface, a display panel, a display chip, and a panel controller. The video input interface receives an external video. The display chip outputs an internal video. The panel controller is respectively coupled to the video input interface, the display panel, and the display chip to receive the internal video and the external video. The video switching device receives an internal instruction and outputs the internal video or the external video to the display panel according to the internal instruction.

The present invention provides a portable device integrated with external video signal display function. The portable device includes a video input interface, a display panel, and a panel controller. The video input interface receives an external video. The panel controller is coupled to the video input interface and the display panel to receive the external video. The panel controller converts the format of the external video and then outputs the external video of converted format to the display panel.

According to the present invention, a panel controller is built in a portable device and the panel controller can receive a high definition video signal input from external, thus, the portable device can be used as a monitor and can display the high definition video signal input from external through the display panel thereof. In some embodiments of the present invention, the panel controller further receives and integrates a high definition video signal input from external and an internal video, and the panel controller presents a picture in picture (PIP) or a picture on picture (POP) on the display panel thereof. Accordingly, the portable device of the present invention, for example, a notebook computer, can replace a TV or a conventional screen of a desktop computer.

In order to make the aforementioned and other objects, features and advantages of the present invention comprehensible, a preferred embodiment accompanied with figures is described in detail below.

### BRIEF DESCRIPTION OF THE DRAWINGS

The accompanying drawings are included to provide a further understanding of the invention, and are incorporated in and constitute a part of this specification. The drawings illustrate embodiments of the invention and, together with the description, serve to explain the principles of the invention.

FIG. 1 is a functional block diagram of a portable device according to the first exemplary embodiment of the present invention.

FIG. 2A is a functional block diagram of a portable device according to the second exemplary embodiment of the present invention.

FIG. 2B is a functional block diagram of a portable device according to the third exemplary embodiment of the present invention.

FIG. 3 is a functional block diagram of a portable device according to the fourth exemplary embodiment of the present invention.

FIG. 4 is a functional block diagram of a portable device according to the fifth exemplary embodiment of the present invention.

FIG. 5 is a functional block diagram of a portable device according to the sixth exemplary embodiment of the present invention.

### DESCRIPTION OF EMBODIMENTS

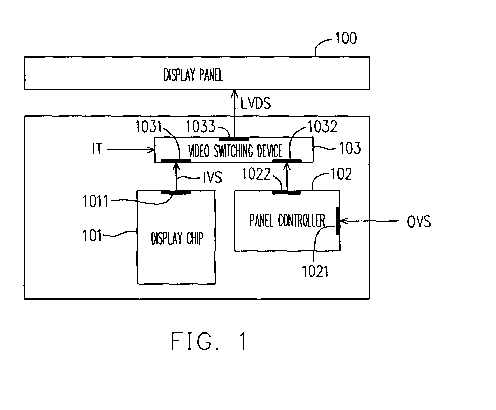

FIG. 1 is a functional block diagram of a portable device according to the first exemplary embodiment of the present invention. In the present embodiment, the portable device is a notebook computer, and in other embodiments, the portable device may be a palmtop computer, a tablet PC, a UMPC, a personal digital assistant (PDA), or a mobile phone.

In FIG. 1, the portable device includes a display panel 100, a display chip 101, a panel controller 102, and a video switching device 103. The video switching device 103 is respectively coupled to the display panel 100, the display chip 101, and the panel controller 102.

The display chip 101 has an output interface 1011 for outputting an internal video IVS of the notebook computer, and the output video format thereof is, for example, low voltage differential signal (LVDS) format which is acceptable to the display panel 100. The panel controller 102 has an input interface 1021 and an output interface 1022, wherein the input interface 1021 receives an external video OVS. In the present embodiment, the external video OVS is a HDMI signal, while in other embodiments, the external video OVS may be a DVI signal, a RGB signal, an YPbPr signal, or any other high definition video signal. The panel controller 102 receives the HDMI signal and converts it into a second internal video of LVDS format which is acceptable to the display panel 100.

The video switching device 103 has a first video interface 1031, a second video interface 1032, and a video output interface 1033. The first video interface 1031 of the video switching device 103 is coupled to the output interface 1011 of the display chip 101 to receive the internal video IVS output by the display chip 101. The second video interface 1032 of the video switching device 103 is coupled to the output interface 1022 of the panel controller 102 to receive the external video OVS provided by the panel controller 102. The video output interface 1033 of the video switching device 103 is coupled to the display panel 100. The video switching device 103 determines whether the display panel 100 receives a signal from the first video interface 1031 or a signal from the second video interface 1032 according to an internal instruction. That is, the video switching device 103 determines whether to output the internal video IVS or the external video OVS of converted format (here the external video OVS of converted format may also be referred to as the second internal video) to the display panel 100 according to an internal instruction IT.

The foregoing internal instruction can be generated by pressing down a default function key of the portable device, while in other embodiments, the internal instruction may also be generated by pressing down a key combination (i.e. pressing down a plurality of keys at the same time or in sequence) or by executing an application software on the portable device.

With the embodiment described above as example, the portable device in the present embodiment (the notebook computer) can be used in two power supply modes, namely a normal mode and a power-saving mode, when the notebook computer is to be used as a monitor. In normal power supply mode, electricity is supplied to devices of the entire portable device system, for example, the display panel, the CPU, the display chip, the chipset, the memory, and the hard disk. In power-saving mode, only the circuits for displaying external high definition video signal are supplied with electricity, for example, only the display panel, the panel controller, and the video switching device are supplied with electricity. Accordingly, the display panel of the notebook computer can be used for playing images output by a high definition DVD player or an electronic game console.

Here the user just plugs the signal cable of the high definition DVD player or the electronic game console into the video input port of the notebook computer first, and then the input interface 1021 of the panel controller 102 can receive the external video OVS input from external through the video input port. Next, the user presses down the function key of the notebook computer so that the video switching device 103 receives the internal instruction IT to perform video signal path switching, for example, the signal path of the display chip 101 electrically connected to the display panel 100 through the video switching device 103 is switched to the signal path of the panel controller 102 electrically connected to the display panel 100 through the video switching device 103, so that the external video OVS can be sent to the display panel 100 through the panel controller 102 and the video switching device 103. Accordingly, the notebook computer in the present embodiment can accomplish the functions of a monitor or for replacing a high definition TV.

Moreover, since in the embodiment described above, the operation is performed by pressing down the function key of the notebook computer, those skilled in the art should be able to accomplish the function of using the notebook computer as a monitor without turning on the power of the notebook computer completely (power-saving mode) by referring to the present embodiment, so that the power consumption of the notebook computer can be reduced. Certainly, in other embodiments, the notebook computer can also work in normal power supply mode to perform foregoing display switching.

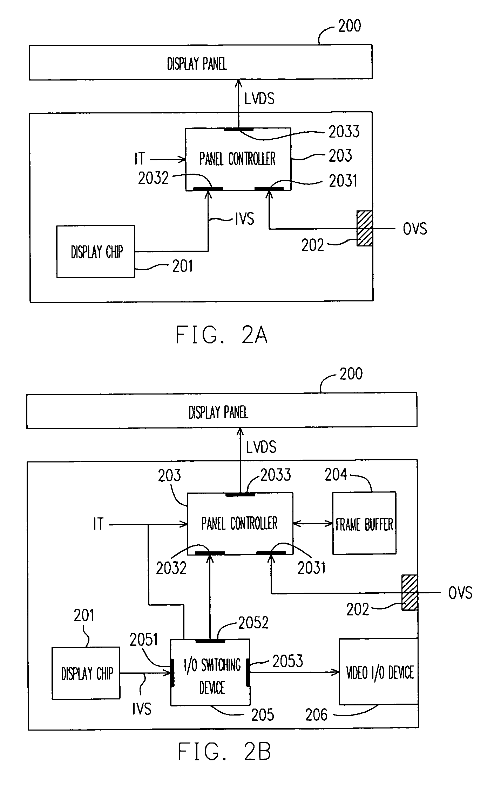

FIG. 2A is a functional block diagram of a portable device according to the second exemplary embodiment of the present invention. Referring to FIG. 2A, similarly, a notebook computer is used as an example of the portable device. The notebook computer includes a display panel 200, a display chip 201, a video input interface 202, and a panel controller 203. The video input interface 202 receives an external video OVS, and here, similarly, a HDMI video is used as an example of the external video. The display chip 201 outputs an internal video IVS, and here a typical RGB format signal is used as an example of the internal video IVS. The panel controller 203 has a first input interface 2031, a second input interface 2032, and an output interface 2033, wherein the first input interface 2031 is coupled to the video input interface 202 to receive the external video OVS, the second input interface 2032 is coupled to the display chip 201 to receive the internal video IVS, and the output interface 2033 is coupled to the display panel 200. The panel controller 203 can select the external video OVS (HDMI) or the internal video IVS (VGA signal) as the output signal to be sent to the driving chip of the display panel 200 according to an internal instruction IT.

Please note, the difference of the embodiment in FIG. 2A from the embodiment in FIG. 1 is that in the embodiment shown in FIG. 2A, the panel controller 203 receives the video IVS and the video OVS at the same time and determines whether the display panel 200 displays the external video OVS or the internal video IVS according to the internal instruction IT. When a user wishes to use the notebook computer as a monitor of a high definition DVD player or an electronic game console, he/she presses down the function key of the notebook computer so that the notebook computer can convert the signal generated by the function key into the internal instruction IT. Next, after the panel controller 203 receives the internal instruction IT, the panel controller 203 converts the external video OVS into LVDS format acceptable by the display panel 200 so that the display panel 200 can display the external video OVS.

In addition, the panel controller 203 is usually implemented with a scaler IC in current technology. With an existing high level scaler IC as example, the scaler IC usually supports picture in picture (PIP) or picture on picture (POP) function, and such scaler IC is usually disposed with a built-in frame buffer. In other embodiments, the panel controller 203 may also be replaced by a high level scaler IC having PIP or POP function so that the user can issue a command through the function key of the notebook computer, and the command is converted into an internal instruction IT through the mechanism described above and sent to the panel controller 203 to allow the display panel 200 to display PIP or POP images.

It should be noted that the portable device in the present embodiment can be used in two power supply modes: namely a normal mode and a power-saving mode. In normal power supply mode, electricity is supplied to the devices of the entire portable device system. In power-saving mode, only the circuits for displaying external high definition video signal are supplied with electricity, for example, only the display panel and the panel controller are supplied with electricity.

FIG. 2B is a functional block diagram of a portable device according to the third exemplary embodiment of the present invention. Referring to FIG. 2B, similarly, here a notebook computer, which is similar to the notebook computer in FIG. 2A, is used as an example of the portable device. In the present embodiment, a frame buffer 204, an I/O switching device 205, and a video I/O device 206 are further included.

The I/O switching device 205 has an input interface 2051, an output interface 2052, and an I/O interface 2053 respectively coupled to the display chip 201, the panel controller 203, and the video I/O device 206. In the present embodiment, the video I/O device is a D-SUB interface to be connected to a projector, while in other embodiments, the video I/O device may also be other equivalent video interfaces.

If the user want to connect the notebook computer to a projector for briefing, an internal video output instruction is generated by pressing down the function key of the notebook computer, and the notebook computer converts the internal video output instruction into an internal instruction IT and then sends the internal instruction IT to the I/O switching device 205. The I/O switching device 205 transmits the internal video IVS to the D-SUB interface 206 in response to the internal instruction IT.

When the notebook computer is used as a monitor, the video input interface 202 is coupled to the high definition output video of a high definition DVD player or an electronic game console. In this case, after the function key of the notebook computer is pressed down, the panel controller 203 receives both the external video OVS and the internal video IVS provided by the display chip, and the external video OVS and the internal video IVS are registered in the frame buffer 204 to be integrated, so that the display panel 200 can present PIP or POP.

Moreover, the D-SUB interface 206 in the present embodiment may also be coupled to an external video. For example, when the notebook computer is used as a monitor, first the user couples the corresponding signal source to the D-SUB interface 206, then he/she issues a D-SUB input command through the function key of the notebook computer. The notebook computer converts the D-SUB input command into an internal instruction IT and sends the internal instruction IT to the I/O switching device 205. The I/O switching device 205 sends the signal input by the D-SUB interface 206 to the panel controller 203 in response to the internal instruction IT. Next, the panel controller 203 converts the video signal received by the second input interface 2032 thereof into a format acceptable by the display panel 200 so that the display panel 200 can display the video input by the D-SUB interface 206. Certainly, here the video input interface 202 may also receive the external video OVS at the same time.

The similarity of the present embodiment and the embodiment described above is that all the video signals are sent to the display panel 200 through the panel controller 203. Thus, when the panel controller 203 has PIP or POP function, the portable device can display two of the external video OVS, the internal video IVS, or the video input by the D-SUB interface 206 at the same time in PIP or POP manner with the assistance of the frame buffer 204.

It should be mentioned that even though an implementation pattern of the portable device integrated with external video signal display function has been described in foregoing embodiments, however, it should be understood by those having ordinary knowledge in the art that the design of the portable device varies with different manufacturers, thus, the present invention is not limited to the application in notebook computers. In other words, the present invention is applicable as long as the portable device includes a video input interface for receiving an external video, a panel control coupled to the video input interface, and a display panel displaying a converted external video received by the panel controller.

Several embodiments of the present invention will be further described below so that those skilled in the art can implement the present invention with ease.

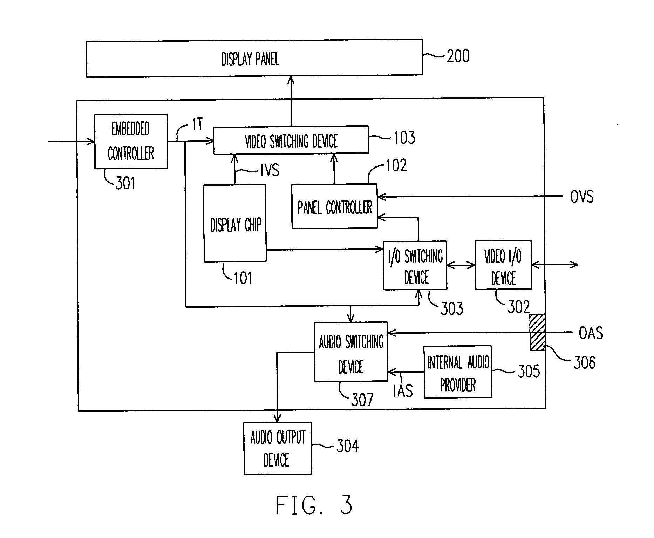

FIG. 3 is a functional block diagram of a portable device according to the fourth exemplary embodiment of the present invention. The present embodiment is similar to the first embodiment illustrated in FIG. 1, however, audio processing is further implemented in the present embodiment, and please refer to FIG. 3 for the description thereof.

In the present embodiment, besides the display panel 200, the display chip 101, the panel controller 102, and the video switching device 103, the portable device further includes an embedded controller 301, a video I/O device 302, an I/O switching device 303, an audio output device 304, an internal audio provider 305, an audio input interface 306, and an audio switching device 307.

The embedded controller 301 is respectively coupled to an external input device (for example, the keyboard or the function key of the notebook computer), the video switching device 103, the I/O switching device 303, and the audio switching device 307. Accordingly, when the notebook computer is used for displaying the external video OVS, just press down the keyboard or the function key of the notebook computer, the embedded controller 301 receives the inputted command and then outputs the internal instruction IT to control the video switching device 103 and allow the display panel 100 to receive the external video OVS of LVDS format. Certainly, the embedded controller 301 also controls the switching of the I/O switching device 303 and the audio switching device 307, which will be described below.

In the present embodiment, the audio input interface 306 is a stereo input interface for receiving an external audio OAS (including analog stereo and HDMI digital audio). The audio switching device 307 is respectively coupled to the audio input interface 306, the internal audio provider 305, the audio output device 304, and the embedded controller 301.

In the present embodiment, the internal audio provider 305 is a typical sound encoder/decoder, such as an AC97 encoder/decoder or a HD Audio encoder/decoder, used by notebook computers for producing the internal audio IAS, while in other embodiments, the internal audio provider 305 may also be an audio decoder of other specifications. In addition, in the present embodiment, the audio output device 304 is a built-in speaker of the notebook computer, while in other embodiments, the audio output device 304 may also be an external speaker or other type of broadcasting device.

The audio switching device 307 receives an internal audio generated by the sound encoder/decoder and an external audio received by the stereo input interface, besides, the audio switching device 307 further determines whether to output the internal audio or the external audio to the audio output device 304 according to the internal instruction IT. The operation will be further described below.

When the keyboard or function key of the notebook computer is pressed down to enable the notebook computer display the external video OVS, the internal instruction IT generated by the embedded controller 301 is output to the audio switching device 307 as well as to the video switching device 103. When the audio switching device 307 receives the internal instruction IT, the audio switching device 307 sends the external audio OAS input by the audio input interface 306 to the audio output device 304.

It should be noted that in the present embodiment, the notebook computer can operation in a power-saving mode when the notebook computer is used as a monitor for displaying the high definition external video OVS and playing the external audio OAS through the built-in speaker thereof. For example, in the power-saving mode, only circuits for displaying the high definition video signal are supplied with electricity, so as to reduce electricity consumption, for example, only the display panel 100, the panel controller 102, the video switching device 103, the embedded controller 301, the video I/O device 302, the I/O switching device 303, the audio output device 304, and the audio switching device 307 are supplied with power. Certainly, in other embodiments, the notebook computer may also work in a normal power supply mode to execute the operations described above.

When the keyboard or function key, or other default key, of the notebook computer is pressed down again to le the notebook computer return to the normal mode to display the internal video IVS, here the embedded controller 301 generates a corresponding internal instruction IT and outputs the internal instruction IT to the video switching device 103 and the audio switching device 307, so that the audio switching device 307 switches the audio path after the audio switching device 307 receives the internal instruction IT. Accordingly, the internal audio IAS generated by the internal audio provider (AC97 or HD Audio) is output to the audio output device 304.

In addition, the I/O switching device 303 in the present embodiment is respectively coupled to the display chip 101, the panel controller 102, the video I/O device 302, and the embedded controller 301. In the present embodiment, the video I/O device 302 is also a D-SUB interface, while in other embodiments, the video I/O device 302 may be other video interface.

The I/O switching device 303 receives an output video signal provided by the display chip 101 and the internal instruction IT, besides, the I/O switching device 303 further outputs the video signal to the video I/O device 302 according to the internal instruction IT, or the external video signal received by the video I/O device 302 to the panel controller 102. The operation will be described below with examples.

When the keyboard or function key of the notebook computer is pressed down to allow the notebook computer to output a video to an external display device (for example, a projector), the embedded controller 301 outputs an corresponding internal instruction IT to control the I/O switching device 303, so that the output video signal (RGB out) generated by the display chip 101 can be output to the external display device through the video I/O device (D-SUB interface) 302.

When the keyboard or function key of the notebook computer is pressed down to allow the notebook computer to receive an external video signal through the video I/O device (D-SUB interface) 302, the embedded controller 301 generates a corresponding internal instruction IT and outputs the internal instruction IT to the I/O switching device 303 and the video switching device 103, so that the video signal input from the video I/O device 302 is sent to the panel controller 102. Then the panel controller 102 converts the received signal into LVDS format acceptable to the display panel 100 and the video switching device 103 performs switching, so that the display panel 100 can display the signal output by the panel controller 102. Accordingly, the portable device in the present embodiment can be used as the monitor of a desktop computer.

Even though the embedded controller 301 is used for producing the internal instruction IT in the embodiment described above, it should be understood by those having ordinary knowledge in the art that the embedded controller 301 may also be replaced by a south bridge chip, which will not be described herein.

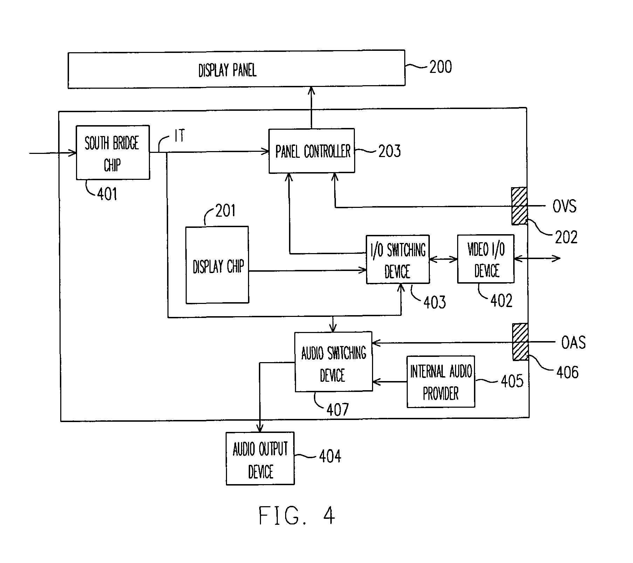

FIG. 4 is a functional block diagram of a portable device according to the fifth exemplary embodiment of the present invention. The present embodiment is similar to the second embodiment illustrated in FIG. 2. However, audio processing and a south bridge chip are added in the present embodiment, and please refer to FIG. 4 for the description thereof.

In the present embodiment, besides the display panel 200, the display chip 201, the video input interface 202, and the panel controller 203, the portable device further includes a south bridge chip 401, a video I/O device 402, an I/O switching device 403, an audio output device 404, an internal audio provider 405, an audio input interface 406, and an audio switching device 407.

The south bridge chip 401 is respectively coupled to an external input device (for example, the keyboard or function key of the notebook computer), the panel controller 203, the I/O switching device 403, and the audio switching device 407. When the keyboard or the function key of the notebook computer is pressed down to make the notebook computer to display the external video OVS, the internal instruction IT generated by the south bridge chip 401 is sent to the panel controller 203 to control the panel controller 203 to perform video path switching, so that the display panel 200 can receive the external video OVS of LVDS format.

In the present embodiment, the couplings, functions, and operations of the audio output device 404, the internal audio provider 405, the audio input interface 406, and the audio switching device 407 are similar to those in the embodiment illustrated in FIG. 3, therefore will not be described herein. In addition, the descriptions of the video I/O device 402 and the I/O switching device 403 in the present embodiment are also similar to those in the fourth embodiment described above, therefore will not be described herein.

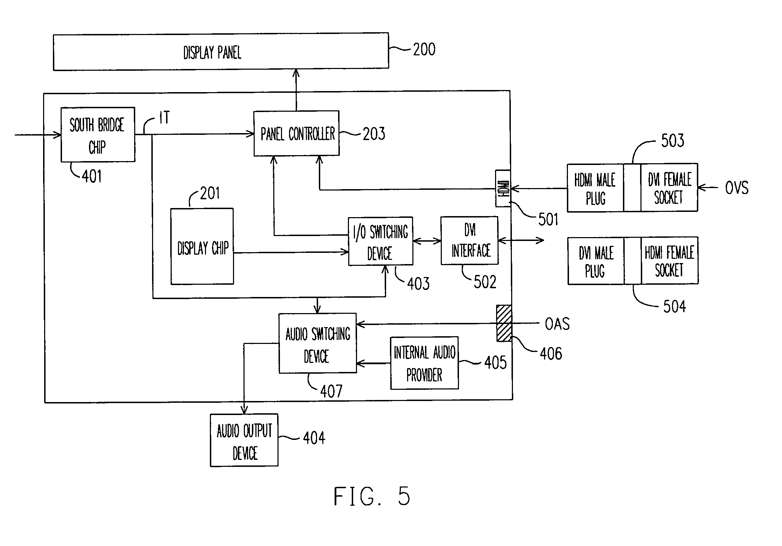

The video input interface 202 and the video I/O devices 206, 302, 402 in the embodiments illustrated in FIGs. 2A, 2B, 3, and 4 can all receive videos provided by different adaptors by using a video adaptor. Please refer to FIG. 5, which is a functional block diagram of a portable device according to the sixth exemplary embodiment of the present invention. The difference between the embodiment in FIG. 5 and the embodiment in FIG. 4 is that the video input interface 202 in FIG. 4 is replaced with a HDMI interface 501 in FIG. 5, and the video I/O device 402 in FIG. 4 is replaced with a DVI interface 502, and in the present embodiment, a video adaptor 503 for converting HDMI male plug to DVI female socket and an adaptor 504 for converting DVI male plug to D-SUB female socket are further included.

If the user wants to input the external video OVS in DVI format and display it on the screen of the notebook computer, the DVI video can be input by coupling the video adaptor 503 for converting HDMI male plug to DVI female socket to the video I/O device 402. If the user wants to input a video of D-SUB format, the video of D-SUB format can be input to the notebook computer through the adaptor 504 for converting DVI male plug to D-SUB female socket. The major advantage of using video adaptor is that when the notebook computer is manufactured, various video inputs can be supported by only using one mould instead of using one mould for D-SUB video and another mould for DVI video, accordingly, the product competitiveness can be increased and the manufacturing cost thereof can be reduced.

In overview, according to exemplary embodiments of the present invention, a panel controller which can receive external high definition video signal is built in a portable device so that the portable device can be used as a monitor for displaying high definition video signal input from external. Moreover, according to exemplary embodiments of the present invention, the portable device can display an internal video generated by itself and a high definition video signal input from external at the same time by presenting them in PIP or POP manner. Accordingly, the portable device provided by the present invention can replace an existing TV or the conventional monitor of a desktop computer.

It will be apparent to those skilled in the art that various modifications and variations can be made to the structure of the present invention without departing from the scope or spirit of the invention. In view of the foregoing, it is intended that the present invention cover modifications and variations of this invention provided they fall within the scope of the following claims and their equivalents.

## Claims

1. A portable device integrated with external video signal display function, the portable device comprising:
a display panel;
a display chip, for providing a first internal video;
a panel controller, for receiving an external video and converting a format of the external video into a second internal video; and
a video switching device, respectively coupled to the display panel, the display chip, and the panel controller to receive the first internal video and the second internal video, wherein the video switching device receives an internal instruction and outputs the first internal video or the second internal video to the display panel according to the internal instruction.

2. The portable device as claimed in claim 1 further comprising:
an audio output device;
an audio input interface, for receiving an external audio; and
an audio switching device, respectively coupled to the audio output device and the audio input interface to receive an internal audio and the external audio, wherein the audio switching device determines whether to output the internal audio or the external audio to the audio output device according to the internal instruction.

3. The portable device as claimed in claim 2, wherein the internal audio is generated by a sound encoder/decoder.

4. The portable device as claimed in claim 1 further comprising:
a video I/O device; and
an I/O switching device, respectively coupled to the display chip and the video I/O device, the I/O switching device receiving an output video signal provided by the display chip and the internal instruction, so that the I/O switching device can output the output video signal to the video I/O device according to the internal instruction.

5. A portable device integrated with external video signal display function, the portable device comprising:
a video input interface, for receiving an external video;
a display panel;
a display chip, for outputting an internal video; and
a panel controller, respectively coupled to the video input interface, the display panel, and the display chip to receive the internal video and the external video, wherein a video switching device receives an internal instruction and output the internal video or the external video to the display panel according to the internal instruction.

6. The portable device as claimed in claim 5 further comprising:
an audio output device;
an audio input interface, for receiving an external audio; and
an audio switching device, respectively coupled to the audio output device and the audio input interface, the audio switching device receiving an internal audio and the external audio, wherein the audio switching device determines whether to output the internal audio or the external audio to the audio output device according to the internal instruction.

7. The portable device as claimed in claim 5, further comprising:
a video I/O device; and
an I/O switching device, respectively coupled to the display chip and the video I/O device, for receiving an output vide signal provided by the display chip and the internal instruction, so that the I/O switching device can output the output video signal to the video I/O device according to the internal instruction.

8. A portable device integrated with external video signal display function, the portable device comprising:
a video input interface, for receiving an external video;
a display panel; and
a panel controller, coupled to the video input interface and the display panel to receive the external video, for converting the format of the external video and then outputting the external video of converted format to the display panel.

9. The portable device as claimed in claim 8 further comprising:
a display chip, for providing a first internal video; and
a video switching device, respectively coupled to the display chip, the panel controller, and the display panel to receive the first internal video and the external video of converted format, wherein the video switching device receives an internal instruction and outputs the first internal video or the external video of converted format to the display panel according to the internal instruction.

10. The portable device as claimed in claim 8 further comprising:
a video I/O device; and
an I/O switching device, respectively coupled to the display chip and the video I/O device, for receiving an output video signal provided by the display chip and the internal instruction, so that the I/O switching device can output the output video signal to the video I/O device according to the internal instruction.
